(19) **Europäisches Patentamt**
**European Patent Office**
**Office européen des brevets**

(11) **EP 3 355 685 B1**

(12) **EUROPEAN PATENT SPECIFICATION**

(45) Date of publication and mention
of the grant of the patent:
**26.04.2023   Bulletin 2023/17**

(21) Application number: **17792612.8**

(22) Date of filing: **04.05.2017**

(51) International Patent Classification (IPC):
***A01G 25/02*** (2006.01)

(52) Cooperative Patent Classification (CPC):
**A01G 25/02; A01G 25/023**

(86) International application number:
**PCT/IL2017/050494**

(87) International publication number:
**WO 2017/191640 (09.11.2017 Gazette 2017/45)**

(54) **METHOD AND SYSTEM FOR IRRIGATION**

BEWÄSSERUNGSVERFAHREN UND -SYSTEM

PROCÉDÉ ET SYSTÈME D'IRRIGATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.05.2016   US 201662332017 P**

(43) Date of publication of application:
**08.08.2018   Bulletin 2018/32**

(60) Divisional application:
**22204527.0 / 4 147 567**

(73) Proprietor: **N-Drip Ltd.**
**4464316 Kfar Saba (IL)**

(72) Inventors:
• **SHANI, Uri**
**6949506 Tel-Aviv (IL)**
• **XIA, Xiaohong**
**9070646 Mevaseret Zion (IL)**
• **VITNER, Asher**
**9692811 Jerusalem (IL)**
• **ROZENGARTEN, Boaz**
**9614105 Jerusalem (IL)**
• **DABACH, Sharon**
**6745905 Tel-Aviv (IL)**
• **MILLER, Zvi**
**3608414 Kiryat-Tivon (IL)**

(74) Representative: **Kramer, Dani et al**
**Mathys & Squire**
**The Shard**
**32 London Bridge Street**
**London SE1 9SG (GB)**

(56) References cited:
| | |
|---|---|
| EP-A1- 1 568 271 | US-A- 3 817 454 |
| US-A- 3 887 139 | US-A- 3 995 436 |
| US-A- 4 226 368 | US-A- 6 036 104 |
| US-B1- 6 953 156 | US-B1- 6 953 156 |
| US-B2- 7 048 010 | US-B2- 7 048 010 |
| US-B2- 7 941 971 | US-B2- 8 348 182 |

EP 3 355 685 B1

**Description**

FIELD AND BACKGROUND OF THE INVENTION

The present invention, relates to irrigation and, more particularly, to method and system for irrigation at low water pressure.

Drip irrigation is a watering method that utilizes pressurized water sources and drips water along a distribution pipe in a controlled manner.

Drip irrigation systems are considered to be more efficient than surface irrigation systems that typically convey water to fields in open canals or low pressure pipelines. Surface irrigation systems require smaller investment and lower energy costs, and these systems typically employ high discharge at the inlet in order to irrigate efficiently and uniformly across a field so that water will reach the end of the field.

U.S. Patent No. 7,048,010 discloses a distribution pipe made of thin-walled sleeve that is collapsible when empty and that includes holes in its walls Branch tubes equipped with low-pressure drip emitters are connected to the holes of the distribution pipe by connectors. The sleeve material is opaque and reflecting the solar radiation so that the growth of microorganisms and algae is suppressed, the pipe is not heated more than 35°C above the ambient air temperature EP1269012A1 describes a variable droplet irrigator (VDI) suitable to be inserted into a hole of a tube. The pressure exerted by the wall of the hole of the irrigator tube on an exterior shaft wall of a plug and the opposing pressure exerted by convex shaped facets of a counter-plug on an interior shaft wall of the plug, causing, as the counter-plug is inserted into the plug, an expansion of the shaft wall of the plug.

SUMMARY OF THE INVENTION

The present invention provides a method of irrigation according to claim 1, and irrigation system according to claim 9.

According to some embodiments there is provided a method of irrigation. The method comprises supplying water to an inclined irrigation pipe provided with a plurality of drippers, wherein the supplying is such that a pressure at a highest level of the inclined irrigation pipe is at most 8825 Pa (90 cm $H_2O$).

According to some embodiments there is provided a method of irrigation. The method comprises supplying water to an inclined irrigation pipe provided with a plurality of drippers, wherein the irrigation pipe is inclined at a varying slope and wherein the supplying is selected to provide a predetermined pressure at a highest level of the inclined irrigation pipe, the predetermined pressure and the varying slope being selected such that a discharge rate along a length of the inclined irrigation pipe varies by no more than 20%. In some embodiments the supplying is such that a pressure at a highest level of the inclined irrigation pipe is at most 8825 Pa (90 cm $H_2O$).

According to some embodiments the water pressure is from about 490 Pa (5 cm $H_2O$) to about 8825 Pa (90 cm $H_2O$) at a highest level of the inclined irrigation pipe.

According to some embodiments the water is supplied by a water distribution conduit.

According to some embodiments at least one of the drippers is characterized by a pressure-discharge dependence which comprises a linear relation between a discharge rate at an outlet of the dripper and an inlet pressure at an inlet of the dripper.

According to some embodiments the linear relation is characterized by a coefficient of the inlet pressure which is from about 2E-11 $m^4s/Kg$ (7 cubic centimeters per hour per cm $H_2O$) to about 1.13E-10 $m^4s/Kg$ (40 cubic centimeters per hour per cm $H_2O$). According to some embodiments of the invention the coefficient is from about 2E-11 $m^4s/Kg$ (7 cubic centimeters per hour per cm $H_2O$) to about 0.565E-10 $m^4s/Kg$ (20 cubic centimeters per hour per cm $H_2O$).

According to some embodiments the linear relation is characterized by an offset parameter from about 0 to about 0.05 l/h (50 cubic centimeters per hour). According to some embodiments of the invention the offset parameter first coefficient is from about 0.01 l/h (10 cubic centimeters per hour) to about 0.04 l/h (40 cubic centimeters per hour).

According to some embodiments a number of drippers per meter length of the inclined irrigation pipe of from about 1 to about 5.

According to some embodiments there is provided an irrigation system. The irrigation system comprises: an inclined irrigation pipe having a plurality of drippers configured to discharge water; a water supply system configured to deliver water to the inclined irrigation pipe at a highest level of the inclined irrigation pipe at a pressure of at most about 8825 Pa (90 cm $H_2O$).

According to some embodiments there is provided an irrigation system. The system comprises: an inclined irrigation pipe having a plurality of drippers configured to discharge water; a water supply system configured to deliver water to the inclined irrigation pipe at a highest level of the inclined irrigation pipe; wherein the irrigation pipe is inclined at a varying slope selected such that a water pressure along a length of the inclined irrigation pipe varies by no more than about 20%.

According to some embodiments there is provided a water irrigation dripper. The water irrigation dripper comprises: an external hollow element having at least one water inlet configured to intake water and at least one water outlet configured to discharge water from the dripper; and an internal element placed inside the external hollow element to form a water pathway in a space therebetween.

Unless otherwise defined, all technical and/or scientific terms used herein have the same meaning as commonly understood by one of ordinary skill in the art to which the invention pertains.

BRIEF DESCRIPTION OF SEVERAL VIEWS OF THE DRAWINGS

Some embodiments of the invention are herein described, by way of example only, with reference to the accompanying drawings. With specific reference now to the drawings in detail, it is stressed that the particulars shown are by way of example and for purposes of illustrative discussion of embodiments of the invention. In this regard, the description taken with the drawings makes apparent to those skilled in the art how embodiments of the invention may be practiced.

In the drawings:

FIG. 1 is a schematic illustration of an irrigation system;
FIG. 2 is a schematic illustration of a dripper;
FIGs. 3A and 3B are schematic illustrations of an irrigation system, according to some embodiments of the present invention;
FIG. 4 is a schematic illustration of an irrigation system having a varying slope, according to some embodiments of the present invention;
FIG. 5A is a cross-sectional illustration of the dripper in embodiments in which the assembled dripper has a plurality of holes;
FIG. 5B is a schematic illustration showing a perspective view of the assembled dripper in embodiments in which the assembled dripper has a plurality of holes;
FIG. 5C is schematic illustration showing an exploded view of an external hollow element (right side) and an internal element (left side), providing, when assembled together, a dripper according to some embodiments of the present invention;
FIG. 6 is a schematic illustration showing a perspective view of the dripper in embodiments in which the assembled dripper has an obstacle in its water pathway;
FIGs. 7A and 7B are schematic illustrations of a horizontal (FIG. 7A) and a vertical (FIG. 7B) orientations of the dripper in a water supply conduit according to some embodiments of the present invention;
FIGs. 8A and 8B are cross-sectional illustrations of a partial water pathway inside the dripper, according to some embodiments of the present invention;
FIGs. 9A-L are schematic illustrations showing cross-sectional views of several assembled drippers, according to some embodiments of the present invention;
FIG. 10A is a schematic illustration showing a perspective view of the assembled dripper in embodiments in which the assembled dripper has an elliptically shaped and water inlet comprising a filter;
FIG. 10B is a schematic illustration showing a perspective view of the assembled dripper in embodiments in which the assembled dripper has an elliptically shaped water inlet;
FIGs. 10C and 10D are schematic illustrations showing a cross sectional view (FIG. 10C) and a perspective side view (FIG. 10D) of the assembled dripper in embodiments in which the assembled dripper has an elliptically shaped water inlet and an additional water inlet oriented diagonally with respect to a normal to an outer surface of an external hollow element;
FIGs. 10E and 10F are schematic illustrations showing a perspective view (FIG. 10E) and a cross sectional view (FIG. 10F) of the assembled dripper in embodiments of the invention in which the dripper include an internal element being held from one side of the dripper;
FIG. 11 is a graph plotting a difference in percentage between a dripper with high discharge to a dripper with low discharge as a function of a field slope for inlet heads about 20, 30, 50, 100 and 150 cm, pipe length of about 150 m and pipe diameter of about 25 mm, as obtained in experiments performed according to some embodiments:
FIG. 12A is a graph showing a relative discharge of 4 different drippers before and after flushing, as obtained in experiments performed according to some embodiments
FIG. 12B is a graph showing water discharge in a conduit during flushing as a function of a slope and an inlet pressure, for a conduit having a length of about 150 m and a diameter of about 25 m, as obtained in experiments performed according to some embodiments
FIGs. 13A-13C are graphs of the inlet pressure as a function of the conduit length for a slope of 0° (FIG. 13A), varying slope (FIG. 13B), and slope selected to ensure a uniform flow rate (FIG. 13C), as obtained in experiments performed according to some embodiments

FIG. 14 illustrates a type dripper which can be used according some embodiments of the invention;

FIGs. 15A and 15B illustrate another type of dripper which can be used according embodiments

FIGs. 16A and 16B illustrate an additional type of dripper which can be used according to embodiments and

FIGs. 17A-F are schematic illustrations showing is perspective views of several the drippers shown in FIGs. 9A-L, according to some embodiments

It is appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

DESCRIPTION OF SPECIFIC EMBODIMENTS OF THE INVENTION

The present invention, relates to irrigation and, more particularly, to method and system for irrigation at low water pressure.

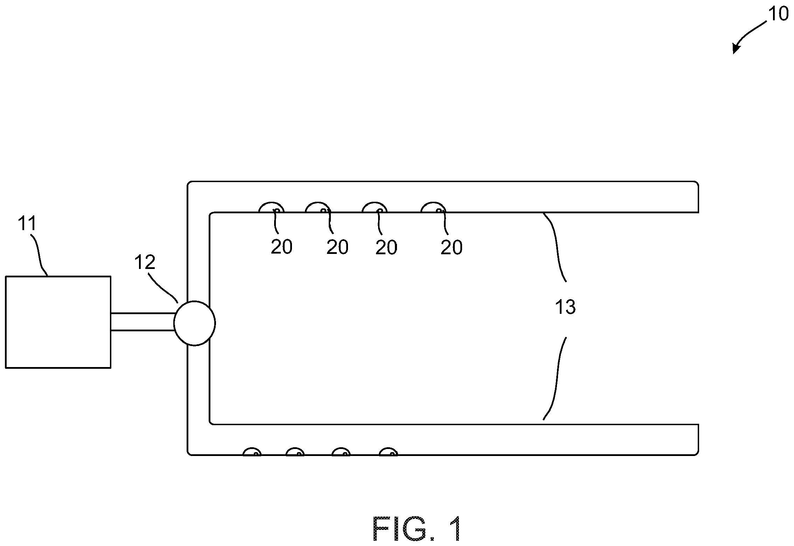

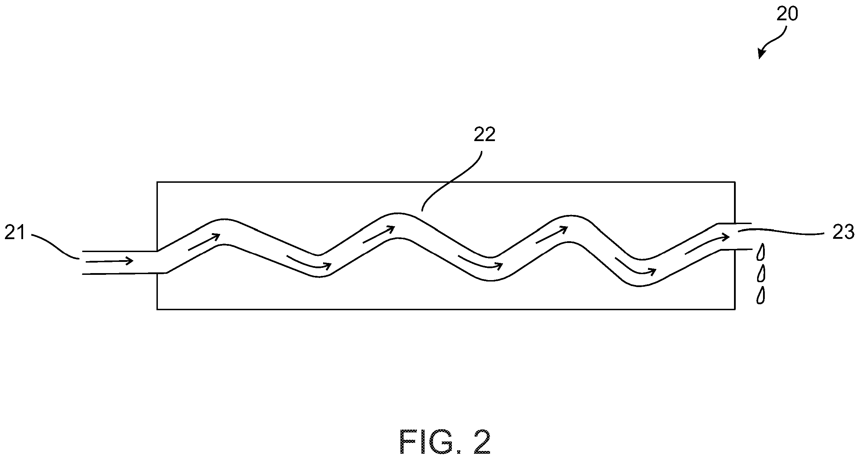

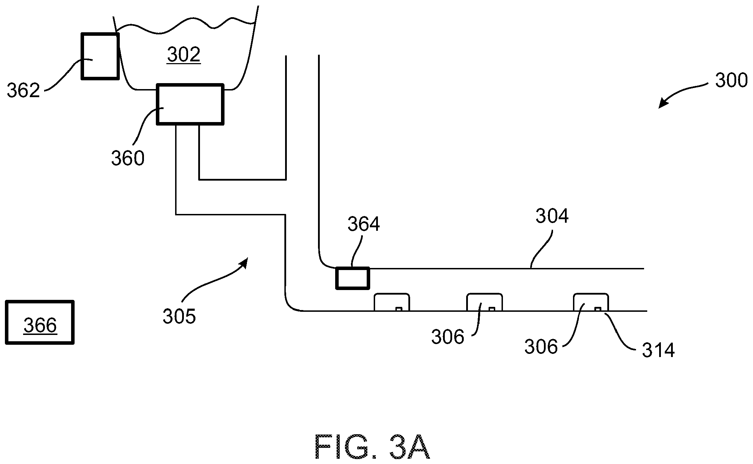

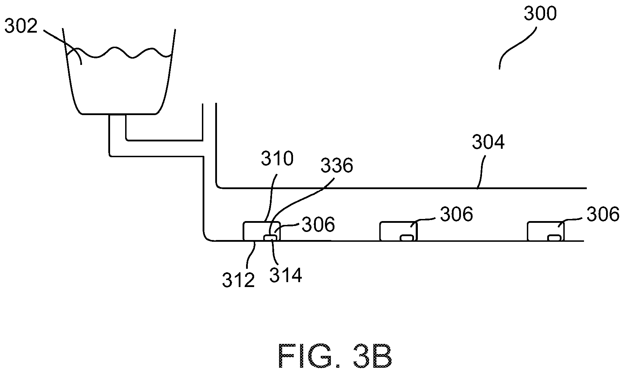

For purposes of better understanding some embodiments of the present invention, as illustrated in FIGs. 3-17F of the drawings, reference is first made to the construction and operation of an irrigation system and a dripper as illustrated in FIGs. 1 and 2.

FIG. 1 illustrates an irrigation system **10** that includes a water supply **11,** a pump **12** for pumping water from the water supply **11** to a plurality of conduits **13,** thereby resulting in high-pressure water flow in the plurality of conduits **13.** A plurality of drippers **20** is attached to the plurality of conduits **13,** for decreasing the velocity of water flowing throughout the conduits **13** and for discharging the water to the ground at a controlled rate.

FIG. 2 illustrates a dripper **20** having a generally zigzag shaped water pathway **22,** comprising alternately arranged protrusions, decreases the velocity of the water passing therethrough. Dripper **20** also includes a water inlet **21** through which water enters the dripper, and a water outlet **23** through which water flows out of the pathway to the ground. Dripper **20** also includes a filter (not shown), for preventing particles from entering dripper **20** and clogging it. The zigzag-shaped pathway **22** creates turbulence, which, in turn, causes energy loss. The energy loss is controlled by the structure and size of the water pathway **22.**

The inventors found that traditional drippers may clog when particles accumulate therein, and that this requires constant supervision and inspection of the irrigation field and may increase the operating expenditure.

The inventors further found that reducing the operating pressure can reduce or eliminate the need for a pump, which, in turn, can reduce energy costs.

FIGs. 3A and 3B are schematic illustrations of an irrigation system **300**. In various exemplary embodiments irrigation system **300** operates at a low water pressure, e.g., less than 0.1 bar, more preferably from about 5 mbar to about 80 mbar, more preferably from about 5 mbar to about 70 mbar, more preferably from about 5 mbar to about 60 mbar, more preferably from about 5 mbar to about 50 mbar, more preferably from about 5 mbar to about 40 mbar *e.g.,* 30 mbar. Irrigation system **300** comprises a water supply system **302,** which preferably supplies water at low pressure. Irrigation system **300** comprises an irrigation pipe **304** and drippers **306**. In the present invention, irrigation pipe **304** is inclined. System **302** can optionally and preferably be connected through a connector and/or valve **360,** optionally and preferably to one or more of water distribution conduits **305**. Alternatively or additionally, system **302** can be connected to one or more of a water reservoir, a water tank, a water container or a well.

In some embodiments system **300** comprises a water pump **362** that delivers water to system **302** or water distribution conduits **305** or irrigation pipe **304,** as desired. System **300** optionally and preferably comprises one or more pressure sensors **364** that measure water pressure in irrigation pipe **304**. System **300** can further comprise a control system **366** for controlling the flow rate of the water supplied to irrigation pipe **304**. Control system **366** can include a circuit that is configured to transmit control signals to pump **362** or connector and/or valve **360** thereby to control the flow rate in pipe **304**. Optionally and preferably control system **366** receives sensing signals from sensors **364** and transmits the controls responsively to these sensing signals, so as to maintain the aforementioned water pressure in irrigation pipe **304.**

Drippers **306** can be attached to, integrated in, or located in the interior of, irrigation pipe **304.** In operation, drippers **306** discharge water through at least one water outlet **314,** to provide a flow of water, for example, to soil, ground, or furrow. Outlet **314** of dripper **306** can optionally and preferably be adjacent to a hole **336** in pipe **304.**

Irrigation pipe **304** can be made of any suitable material known in the art to operate normally to withstand pressure of at least 1 bars, to withstand accidental pressures as a result of loads generated, for example, by overridden wheels of a vehicle, and/or to withstand weather conditions, such as rain, or high temperatures typically caused from heat generated by the sun. For example, suitable materials may be polyethylene, polypropylene, polyvinylchloride and other thermoplastic materials. Typically, irrigation pipe **304** has a diameter of from about 20 mm and to about 40 mm, and length of from about 5 to about 300 m.

Drippers **306** are disposed along irrigation pipe **304.** A typical distance between two adjacent drippers along pipe **304** is, without limitation, from about 20 to about 100 cm.

Drippers **306** can be embodied in more than one way. In the representative example shown in FIG. 3B, which is not to be considered as limiting, drippers **306** can be fixed on the inner wall of irrigation pipe **304,** and may comprise one or more water inlet **312** through which the water enters the dripper **306,** one water outlet **314** through which the water exits the dripper **306,** and a water pathway **310** through which the water flows from the inlet **312** to the outlet **314.** For example, a typical dripper **306** may include from about 1 to about 100 dripper inlets, and 1 dripper outlet.

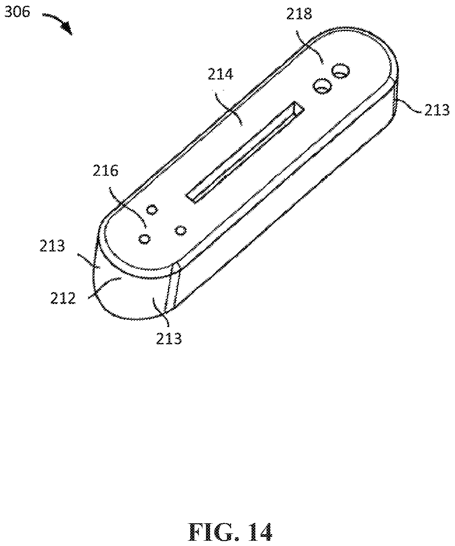

FIG. 14 illustrates dripper **306** according to another embodiment In this embodiment, dripper **306** comprises a compact housing **212** made of a sturdy and non-corrosive material. The top surface **214** of dripper **306** defines two sets of inlets, each including one or more openings extending through the top surface **214.** The inlets are exposed to the irrigation water flowing through the inside of the irrigation tube.

The first inlet **216** preferably includes three openings. Water flowing into the first inlet **216** proceeds through the body of dripper **306** to an outlet (not shown). In traveling through dripper **306** to the outlet, water pressure is reduced and water flow is reduced to a trickle or drip flow rate. The three openings are preferably sufficiently small in diameter to perform a filter function for water flowing through the first inlet **216,** for example, to filter out debris or grit that might otherwise clog the interior of dripper **306.** The openings making up the first inlet **216** are optionally and preferably spaced in a triangular pattern to allow water to uniformly impact interior surfaces of dripper **306.** Although three equally spaced openings are shown in the preferred embodiment, other numbers and arrangements of openings may be utilized to form the first inlet **216.**

The second inlet **218** preferably including two openings spaced along a center axis bisecting the length of dripper **306.** Water flowing into the second inlet **218** optionally and preferably does not proceed through the body of dripper **306** but, instead, serves a pressure compensation function. Water flowing into the second inlet **218** accumulates in a chamber in the interior of dripper **306,** applying pressure to the chamber in an amount substantially equivalent to the pressure in the irrigation tube. Because water flowing through the second inlet **218** does not flow through dripper **306,** the openings of the second inlet **218** need not filter the inflowing water and the openings need not be small in diameter. Although two openings are shown in the preferred embodiment, as seen in FIG. 14, other numbers and arrangements of openings may be utilized to form the second inlet **218.**

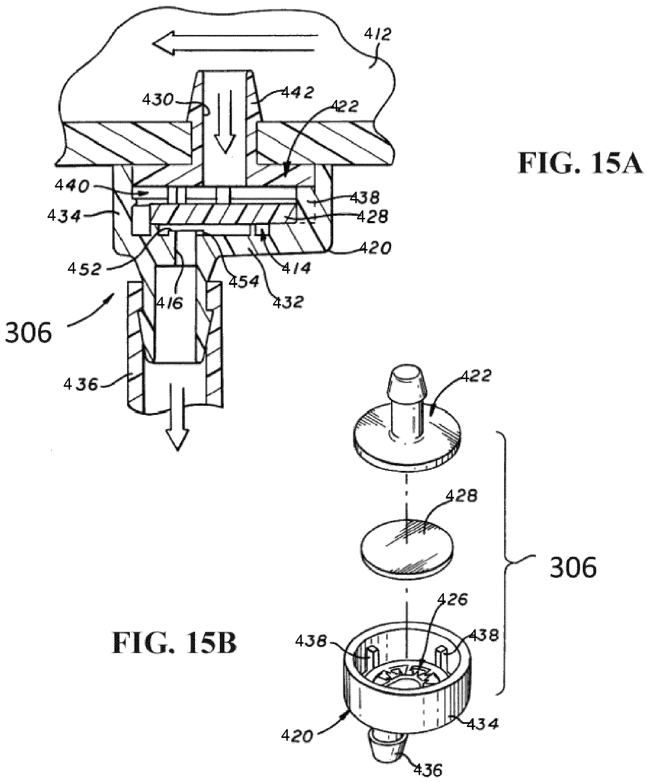

FIGs. 15A and 15B illustrate dripper **306** according to another embodiment In this embodiment, dripper **306** comprises a compact housing which can be conveniently and economically formed from assembled plastic molded housing components. The housing includes a generally cup-shaped base **420** adapted for assembly with a cap **422** to form a substantially enclosed housing interior. In general terms, the flow channel **414** is defined by a channel pattern **426** formed in the base **420,** in cooperative relation with a resilient and flexible elastomeric valve member **428.** Water is supplied to the flow channel **414** via a water inlet **30** formed by the cap **422,** and water is discharged from the flow channel through the discharge outlet **416** formed in the base **420.** The geometry of the channel pattern **426** cooperates with the valve member **428** to define the three dimensional flow channel **414** for improved pressure drop between the inlet **430** and the outlet **416.**

Housing base **420** has an upwardly open, generally cup-shaped construction including a circular bottom or floor surface **432** joined at the perimeter thereof to a cylindrical upstanding outer wall **434.** The channel pattern **426** is formed on the floor **432** with a generally circular configuration arranged about the outlet **416** which may include a short downwardly projecting hollow stem **436** for press-fit attachment to discharge tubing (not shown), if desired. A plurality of spacer posts **438** are also formed on the base **420** to project upwardly from the floor **32** at the floor perimeter and terminate with upper ends disposed above the channel pattern **26,** but below the upper edge of the outer wall **432.**

The valve member **428** comprises a resilient disk having a size and shape to fit into the housing base **420,** with an outer margin of the valve member **428** fitting within the spacer posts **438.** The housing cap **422** is then assembled with the base **420** by press-fit mounting of the disk-shaped cap into the open end of the base, to seat the cap **422** against the upper ends of the spacer posts **438.** The cap **422** can be securely connected to the base **420** in a sealed manner by use of a suitable adhesive, or by ultrasonic welding or the like. When assembled, the housing base **420** and cap **422** defined an inlet chamber **440** (FIG. 15A) within which the valve member **428** is retained with at least some floating movement in a position aligned over the channel pattern **426.** The water inlet **430** is formed in the cap **422** and is typically associated with an inlet stem **442** which may include a barbed construction for press-on puncture type attachment to the water supply hose **412.**

From flow channel **414,** the water enters the centrally located discharge chamber having a raised circular boss **452** projecting upwardly from the floor **432** of the housing base **420** to engage the valve member **428.** The boss **452** has an upwardly open discharge regulating groove **454** formed therein, for discharge flow of the water from the outlet chamber to the water outlet **416.**

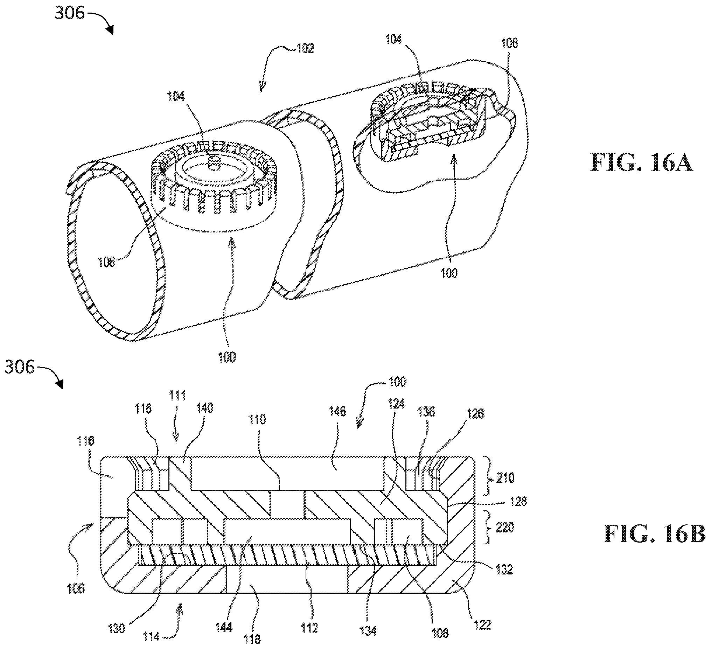

FIGs. 16A and 16B illustrate dripper **306** according to another embodiment The dripper **306** may be a molded plastic body that may be inserted into thin walled drip tape **102,** or any other type of water conduit such as an extruded hose, at regularly spaced intervals during or immediately following extrusion of the drip tape. Each dripper **306** may have a single outlet that may be positioned at an opening **104** that is cut or pre-formed in the wall of the drip tape during production. Water in thin walled drip tape **102** may enter the dripper **306** by passing through a filter at the dripper's sides or perimeter **106**. Because the filter area is in the dripper's sides or perimeter, the dripper **306** can provide a filter of large area relative to the size or thickness of the dripper **306**. For example, the dripper **306** in a preferred embodiment may have a thickness of about 3.5 mm, and a filter area of at least about 12 mm$^2$.

In one embodiment, filtered water then passes through labyrinth **108** where water pressure is reduced. For example, water pressure may be reduced from the line pressure in the drip tape (e.g., 12 psi) to a substantially lower pressure. Water at the reduced pressure then may flow through outlet hole **110** near the dripper's first or outer face **111** welded or adhered to the drip tape wall.

In one embodiment, the dripper **306** is pressure regulated using diaphragm **112** at or adjacent the dripper's second or inner face **114**. Water pressure in the drip tape acts against the diaphragm to regulate the dripper's flow rate as water pressure changes within the water conduit.

Dripper **306** may include three parts, two body members **122** and **124,** and elastomeric diaphragm **112**. The dripper's first or outer face **111** may have one or more walls or surfaces that are welded, adhered to or otherwise bonded to the drip tape inner wall. The dripper **306** has a second or inner face **114** that may project inwardly toward the interior of the drip tape. The thickness of the dripper **306** between the first or outer face and the second or inner face is preferably less than about 5 mm, and most preferably less than about 3.5 mm. The filter area of the dripper **306** is entirely on the sides **106** or periphery of the dripper **306,** between the dripper's outer face **111** and inner face **114.**

In one embodiment, the filter area may be configured as a plurality of slots **116** through the sides of the dripper **306** which provide filtering inlets or passages for water in the drip tape to enter into the dripper **306**. Each slot **116** through the dripper's side walls may have dimensions that are small enough to block particles or debris from passing through the slot to the interior of the dripper **306,** while allowing a desired flow rate of water from the drip line into the interior of the dripper **306.**

For example, in one embodiment, the dripper **306** may be generally disc shaped, and each slot **116** may extend radially through the dripper's cylindrical side walls **106,** from the perimeter or outer surface to the interior of the dripper **306**. Dripper **306** may have 24 radial slots, each slot having a width of less than about 0.5 mm, and most preferably having a width of less than about 0.3 mm. The radial thickness of the dripper's side walls may be between about 0.5 mm and about 1.0 mm. The dripper's radius may be between about 3.5 mm and about 6.5 mm, and the dripper's outer circumference may be between about 10 mm and about 30 mm.

In one embodiment, the second or inner face **114** of the dripper **306** may have an opening **118**. Diaphragm **112** may be an elastic bladder that is positioned between body members **122** and **124,** while the diaphragm is directly exposed on one side to the water pressure within the drip tape or other water conduit where the dripper **306** is mounted. For example, the diaphragm may have a thickness of about 0.5 mm to about 0.75 mm, and a surface which is large enough to cover both pressure regulating chamber **144** and labyrinth **108** which is formed in second body member **124** on surface **132.**

In one embodiment, the diaphragm may be exposed to line pressure in the drip tape which may enter through opening **118** and directly act against the diaphragm, causing the diaphragm to flex as the water pressure at the diaphragm on the other side is decreased. If water pressure in the drip tape increases, the diaphragm may flex radially toward outlet **110** and away from the dripper's second or inner face, reducing the outlet flow from the dripper **306**.

In one embodiment, water acting against the diaphragm while passing through opening **118** does not also pass through a filter. Instead, the filter may be an array of slots **116** in the dripper's cylindrical side walls **106,** and are dedicated only for water entering the dripper's pressure reducing area, or labyrinth **108**.

In one embodiment, diaphragm **112** may be held in place by sandwiching outer portions of the diaphragm between first body member **122** and second body member **124** of the dripper **306**. The first and second body members may be engaged together with a snap or press fit. For example, the second member may be inserted into the first member, and may be held in place by shoulders **126** that extend inwardly from the dripper's side walls **106**. The inwardly facing shoulders may capture and hold the second member in place because the dimensions of the second member's outer rim or perimeter **128** may be slightly larger than the dimensions of shoulders **126**. Diaphragm **112** may be held between surface 130 of the first member and one or more walls **132, 134** of the second member. Optionally, the shoulders and outer rim or perimeter may be tapered to facilitate ease of assembly. Additionally, portions of the diaphragm that are radially outside of opening **118** may be compressed axially by a tight or sealing interfit between the first and second body members.

In one embodiment, water entering the dripper **306** through the filter area in the dripper's sides may be collected in manifold flow channel **136** inside the filter area. For example, the manifold flow channel may be a passage radially within the filter area on the dripper's side walls **106,** and may be enclosed by the drip tape wall, surface **138,** and wall **140** that circumscribe exit pool **146**.

In various exemplary embodiments irrigation pipe **304** is arranged to compensate pressure losses in the drippers along the irrigation pipe. In operation, water supply system **302** delivers water to pipe **304,** optionally and preferably at a highest level of pipe **304.**

It was found by the Inventors that this results in a generally high water flow rate, and also maintains a generally uniform flow rate in all drippers **306.**

In some embodiments of the control system **366** ensures that water supply system **302** delivers the water to pipe **304** at a pressure of at most about 8825 Pa (90 cm $H_2O$) (*e.g.,* from about 490 Pa (5 cm $H_2O$) to about 8825 Pa (90 cm $H_2O$)), or at most 7906.67 Pa (80 cm $H_2O$) (*e.g.,* from about 490 Pa (5 cm $H_2O$) to about 7906.67 Pa (80 cm $H_2O$)), or at most 6918.33 Pa (70 cm $H_2O$) (*e.g.,* from about 490 Pa (5 cm $H_2O$) to about 6918.33 Pa (70 cm $H_2O$)), or at most 5930 Pa (60 cm $H_2O$ (*e.g.,* from about 490 Pa (5 cm $H_2O$) to about 5930 Pa (60 cm $H_2O$)), or at most 4941.67 Pa (50 cm $H_2O$ (*e.g.,* from about 490 Pa (5 cm $H_2O$) to about 4941.67 Pa (50 cm $H_2O$)), and further or at most 3953.33 Pa (40 cm $H_2O$) *(e.g.,* from about 490 Pa (5 cm $H_2O$) to about 3953.33 Pa (40 cm $H_2O$)). For example, when supply system **302** is a pump and/or comprises a controllable valve (not shown), control system **366** can controls the pump or valve to deliver the preferred pressure. Alternatively, water supply system **302** can be configured to the deliver the water at the aforementioned pressure without a control system (*e.g.,* by a judicious selection of the outlet diameter and/or pressure within the water supply system **302).**

Drip irrigation systems involve investment costs and power consumption in high pressure (energy) and filtration systems to work efficiently. Surface irrigation systems typically employ high discharge at a water inlet in order to irrigate efficiently and uniformly using surface irrigation so that water will reach an end of the field. It was found by the inventors of the present invention that reduction of water amount by a steeper slope field may cause runoff, erosion and soil degradation.

Drip irrigation systems provide higher water uniformity across a field than surface irrigation due to reduced runoff and leaching, however, it was realized by the inventors of the present invention that the high pressure requirement causes high energy costs and high investment costs in filters, pumps, pressure regulators, and materials of irrigation pipe that can withstand high pressure. It was realized by the inventors of the present invention that drip irrigation systems that work at pressures between 0.05 to 0.1 bar and cannot be applied in large commercial fields. A criterion for discharge variation in an irrigated field is typically 10% or less.

The inventors found that an irrigation system comprising an irrigation pipe that may be inclined at a varying slope, may be selected such that a water discharge along a length of the inclined irrigation pipe varies by no more than about 20%, or no more than 18%, or no more than 16%, or no more than 15%, or no more than 13%, or no more than 12%, or no more than 10%.

As used herein, "water discharge" refers to a volume of water that exits the dripper per unit time.

In some embodiments irrigation pipe **304** is inclined at a gradually varying slope, and in some embodiments irrigation pipe **304** is inclined at a slope that varies non-continuously.

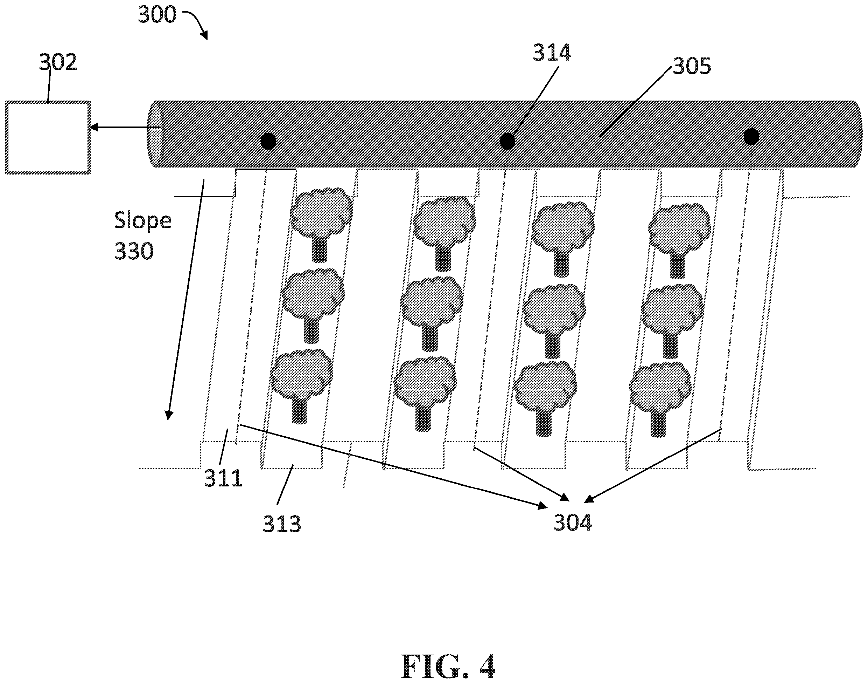

FIG. 4 is a schematic illustration of irrigation system **300,** in embodiments of the invention in which a varying slope is employed. Irrigation system **300** can comprise water supply system **302,** one or more inclined irrigation pipe **304** and a plurality of drippers **306** (not shown, see, *e.g.*, FIGs. 3A and 3B). In the representative illustration of FIG. 4, which is not to be considered as limiting, the irrigation system **300** comprises a distribution conduit **305** into which water is discharged from system **302.** Conduit **305** is provided with holes **314** to which irrigation pipes **304** are connected with suitable connectors (not shown). The irrigation pipes **304** are optionally and preferably placed between furrows **311** that are typically used for flooding and are arranged in a slope **330** for compensating in losses in flow along the irrigation pipes **304.** Slope **330** can vary (gradually or non-continuously) along the irrigation pipes **304.**

For example, irrigation pipe **304** may be inclined at a gradually varying slope with a higher slope (in absolute value) at the beginning of the irrigation pipe **304** and a lower slope (in absolute value) at one or more location downstream pipe **304.** It was found by the Inventors that this can increase the water flow rate, and can maintain a generally uniform pressure in all drippers **306.** In some embodiments irrigation pipe **304** is inclined at a gradually varying slope that is selected such that a water discharge along a length of pipe **304** varies by no more than about 20%, or no more than 18%, or no more than 16%, or no more than 15%, or no more than 13%, or no more than 12%, or no more than 10%.

The varying slope is optionally and preferably selected such that for at least one pair of drippers in pipe **304,** more preferably for at least two pairs of drippers in pipe **304,** more preferably for at least three pairs of drippers in pipe **304,** more preferably for any pair of drippers in pipe **304,** the ratio between the slope $S_1$ at a location of one of drippers of the pair and the slope $S_2$ at a location of another one of the drippers of the pair, is equal or approximately equal to the *n*th power of the ratio between the distances of the drippers from the lowermost point of pipe **304** (*e.g.,* the farthest point of pipe **304** from conduit **305**). Mathematically, this can be expressed as $S_1/S_2 \propto [(L-\ell_1)/(L-\ell_2)]^n$, where L is the length of pipe **304,** $\ell_1$ is the distance between the highest point along pipe **304** and one of drippers of the pair, and $\ell_2$ is the distance between the highest point along pipe **304** and the other dripper of the pair. The value of the exponent n is preferably from about 1.5 to about 4.5, *e.g.,* about 2 or about 3.

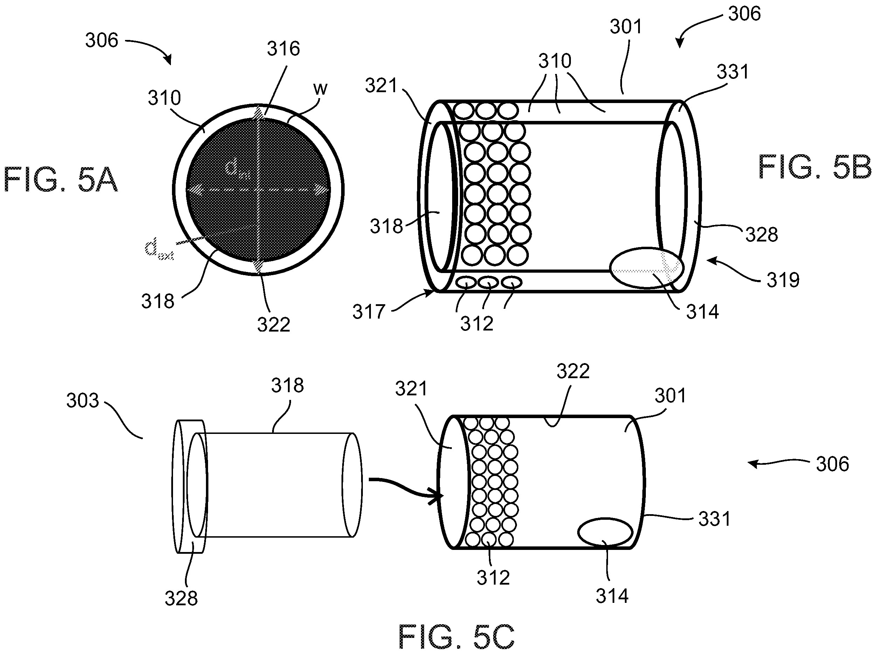

Reference is made to FIGs. 5A-C which are schematic illustrations of a dripper **306,** according to the present invention. Dripper **306** optionally and preferably comprises a plurality of holes functioning as water inlets **312.** However, this need necessarily be the case, since, for some applications, the end of the dripper can serves as an inlet. Dripper **306** can be useful in irrigation systems such as, but not limited to, the irrigation systems illustrated above with reference to FIGs. 3A, 3B and FIG. 4. Dripper **306** can be attached to, or located in, one or more irrigation pipes **304**. Dripper **306** can be integrated into irrigation pipes **304** during pipe manufacturing process.

In the representative illustration of FIG. 5A, dripper **306** is assembled from an external hollow element **301,** e.g., in a shape of a hollow tube; and having one or more water inlets **312** for intaking water into dripper **306,** and one or more water outlets **314** for discharging water from the dripper **306**. Dripper **306** also comprises an internal element **303** having a diameter that is smaller than the diameter of the external hollow element **301,** such that when the internal element **303** is inserted inside external hollow element **301,** a water pathway **310** is formed in a space therebetween. Pathway **310** can extend from one end **321** of dripper **306** to another end **331** of dripper **306**. End **331** is optionally and preferably closed. In various exemplary embodiments of the invention water pathway **310** is formed such that there is at least one inlet-outlet pair that is connected by a straight line that is within water pathway **310**. This allows at least a portion of the water to flow along a straight line from one or more of the inlet(s) **312** to one or more of the outlet(s) outlet **314,** and is unlike drippers having, for example, zig-zag or labyrinth pathways.

Herein "an inlet-outlet pair" is a pair that includes one of inlet(s) **312** and one of outlet(s) **314**.

Water inlets **312** can be in the form of a plurality of small cavities having a diameter from about 0.05 mm to about 1 cm and inter-inlet intervals of from about 0.01 mm to about 1 cm. Water outlets **314** are preferably configured to discharge water from the dripper to provide a desired discharge flow rate of water out from the dripper to the soil or ground. The hole diameter of the water outlets **314** is typically from about 0.5 mm to about 2 mm. Water outlets **314** of dripper **306** can optionally and preferably be in communication with a hole **336** (shown in FIG.3B) located in the inclined irrigation pipe **336** (shown in FIG. 3B).

According to some embodiments dripper **306** is characterized by a pressure-discharge dependence which comprises a linear relation between a discharge rate Q (water volume per unit time) at outlet **314** and an inlet pressure P at inlet **312**. This relation can be expressed mathematically as $Q = a_1 P + a_0$, where $a_1$ is an inlet pressure coefficient and $a_0$ is an offset parameter. A typical value for $a_1$ is from about 2E-11 $m^4 s/Kg$ (7 cubic centimeters per hour per cm $H_2O$) to about 1.13E-10 $m^4 s/Kg$ (40 cubic centimeters per hour per cm $H_2O$) or from about 2E-11 $m^4 s/Kg$ (7 cubic centimeters per hour per cm $H_2O$) to about 5.65E-11 $m^4 s/Kg$ (20 cubic centimeters per hour per cm $H_2O$) or from about 2.54E-11 $m^4 s/Kg$ (9 cubic centimeters per hour per cm $H_2O$) to about 3.39E-11 $m^4 s/Kg$ (12 cubic centimeters per hour per cm $H_2O$). A typical value for $a_2$ is from about 0 to about 0.05 l/h (50 cubic centimeters per hour), or from about 0.01 l/h (10 cubic centimeters per hour) to about 0.04 l/h (40 centimeters per hour), or from about 0.02 l/h (20 cubic centimeters per hour) to about 0.03 l/h (30 cubic centimeters per hour).

FIG. 5B illustrates a longitudinal cross-sectional illustration of dripper **306,** according to some embodiments of the present invention, and FIG. 5C illustrates an exploded side view of external hollow element **301** (right side) and internal element **303** (left side), according to the present invention.

The dripper **306** may comprise an external hollow element **301** having a first end **331,** which may be closed. Internal element **318,** with a head **328,** may be inserted into the external hollow element **301**. Head **328** of internal element **303** preferably closes one end **321** of external hollow element **301** after these elements are assembled together. External hollow element **301** can have a plurality of water inlets **312** at one end **317** and one or more water outlets **314** at the other end **319**.

With reference to FIG. 5A, an internal diameter $d_{int}$ is typically defined between the two farthest antipodal points on an outer wall **318** of internal element **303**. An external diameter $d_{ext}$ is typically defined between the two farthest antipodal points on an inner wall **322** of external hollow element **301.** When the internal element **303** is introduced into the external hollow element **301,** a water pathway **310** is created having a width *W*. The width *W* is optionally and preferably be set to provide a sufficiently narrow water pathway **310** and to provide a small hydraulic diameter ($D_H$) for reducing flow within the dripper **306**.

The hydraulic diameter ($D_H$) is a parameter that is defined as four times the ratio between a flow area A and a wetted perimeter of a conduit, P, as defined in Equation I:

$$D_H = 4A/P \quad \text{(EQ. I)}$$

In EQ. I A can be the cross-sectional area of the water pathway **310** in dripper **306** and P can be the wetted perimeter of the cross-section, in which case $D_H$ is referred to as the hydraulic diameter of pathway **310.**

For example, when water pathway **310** has a circular shape, the hydraulic diameter according to EQ. I above is reduced to the diameter of the circle forming the pathway.

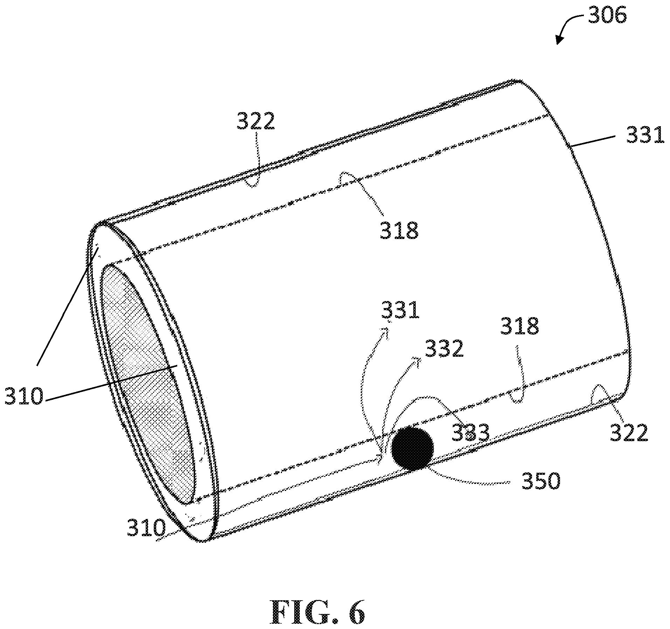

A typical hydraulic diameter of pathway **310,** suitable for the present embodiments is from about 50 $\mu$m to about 500 $\mu$m. Other values for hydraulic diameter are also contemplated, provided that clogging within the water pathway **310** is reduced or inhibited, as further discussed hereinbelow with reference to FIG. 6.

When water pathway **310** has an annulus shape, the hydraulic diameter is defined as the width W of the pathway, which can be calculated as the difference between the internal diameter $d_{501}$ of external hollow element **301,** and the external diameter $d_{508}$ of internal element **303,** according to EQ. II:

$$D_H = W = d_{301} - d_{303} \qquad (EQ.\ II)$$

It is appreciated that the water flow rate decreases in a channel as its hydraulic diameter decreases.

The Inventors of the present invention found that by utilizing a narrow hydraulic diameter dripper according to embodiments particular at a low operating pressure, may provide a low discharge flow rate when exiting from dripper **306.** Small hydraulic diameter may be achieved by providing a sufficiently large relative surface area of the narrow water pathway **310,** and/or by reducing the energy of water flowing in the water pathway **310,** for example, by increasing friction for water flow of the narrow water pathway **310** of the dripper **306.** An enlarged relative surface area of water pathway **310** can be achieved, for example, by making shaped pathway. For example, the pathway can be shaped as a polygon (*e.g.*, a triangle, a square, etc). An enlarged relative surface area of water pathway **310** can alternatively or additionally be achieved by providing a sufficiently long pathway between the inlet **312** and outlet **314.**

Particle accumulation at the dripper entrance can cause clogging and reduced flow discharge, thus resulting in flow discharge decrease or no flow.

The advantage of having a pathway as described above can be better understood with reference to FIG. 6 which illustrates a perspective side view of dripper **306** according to some embodiments of the present invention. Shown is an obstacle **350,** such as a particle or an air bubble, in its water pathway **310,** which, in the illustrated embodiment, has an annulus shape. Obstacle **350** can be in contact with inner wall **322** of external hollow element **301** and outer wall **318** of internal element **303** of dripper **306,** thereby partially or even completely clogging a region pathway **310.** However, since pathway **310** is not one-dimensional, there are other alternative paths within pathway **310** allowing bypass routes **331, 332** and **333** around any obstacle that may be inside dripper **306.** Moreover, the amount of particles entering the dripper may be reduced by providing dripper **306** with a narrow entrance. Water inlets **304** may be of a size of from about 50 μm to about 500 μm. Thus, pathway **310** is not completely blocked by obstacle **350.**

In some embodiments there are multiple capillary water inlets **312.** Typically, but not necessarily, for example, between 1 and 100 capillary water inlets are employed. The advantage of having a multiplicity of capillary water inlets is that the capillary water inlets can serve as a filter for dripper **306,** and reduce the risk of dripper clogging.

According to some embodiments the hydraulic diameter $D_H$ is from about 0.01 to about 1 mm. According to some embodiments the external hollow element **301** has an inner diameter of from about 0.5 mm to about 5 mm.

Cross-sectional area of the dripper suitable for the present embodiments can be from about 3 mm$^2$ to about 300 mm$^2$, depending on the width of water pathway **310.** The water flow rate of water flowing through dripper **306,** is typically from about 100 ml/h to about 10,000 ml/h at a hydraulic pressure of from about 0.1 m $H_2O$ to about 2 m $H_2O$. For example, a dripper of about 3 cm in length and an annulus about 100 μm in width can produce a flow rate of about 1400 ml/h at a pressure of 1.5 m $H_2O$.

The outer surfaces of external **301** and internal **303** elements may be parallel to each other up to a tolerance of about 10%. The distance between water inlets **312** can be from about 0.5 to about 2 mm The distance between water inlets **312** and water outlets **314** can be from about 1 to about 6 cm.

As may further be appreciated, irrigation system **300,** by employing the drippers of the present embodiments, and operating them at a low pressure may eliminate a need for pump **12** of the kind displayed in FIG. 1, and as a result, irrigation pipes **304** of the present embodiments may be made of fewer and cheaper raw materials.

In addition, the Inventors found the dripper of the present embodiments allows particles to be washed out by water flowing inside. Even if particles are partially clogged within the dripper of the present embodiments, the partial clogging may unclog when clean water is provided to the dripper, by washing the particle away. As a result, the dripper of the present embodiments has natural, built-in, self-cleaning capabilities.

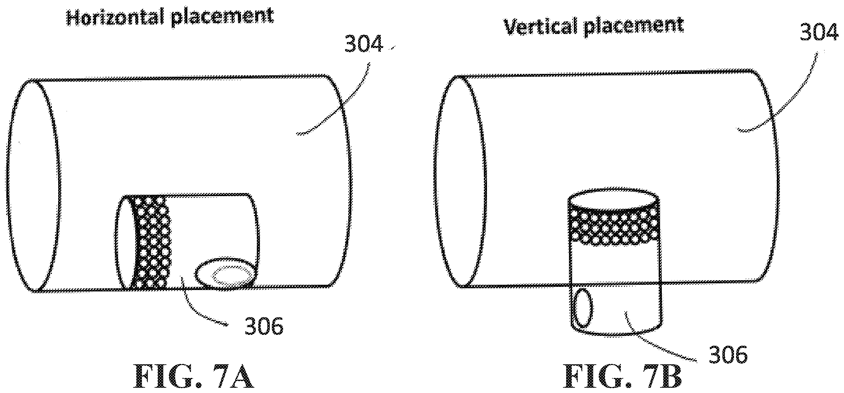

With reference now to FIGs. 7A and 7B, the plurality of drippers **306** in any one of the embodiments of the irrigation system described above can be positioned either horizontally or vertically relative to the position of the irrigation pipe **304,** as illustrated in FIG. 7A and FIG. 7B, respectively.

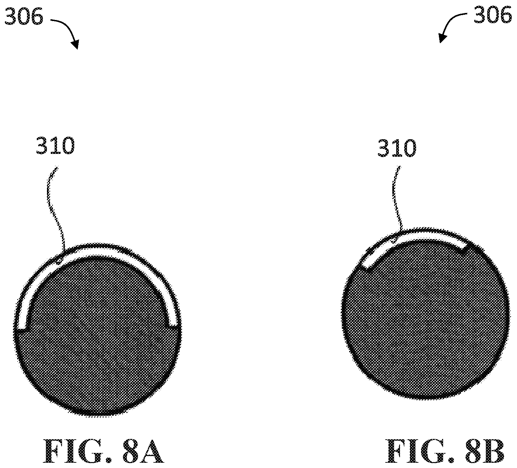

FIGs. 8A and 8B are cross-sectional illustrations of partial water pathway inside a dripper **306,** according to some embodiments of the present invention.

As described hereinabove in FIGs. 5A-5C, water pathway **310** is created by assembling the internal element **303** with the external hollow element **301.** Internal element **303** may have alternative cross-sections such by utilizing the water pathway **310** in a shape of a partial ring, namely, by partially utilizing at least a portion of the annulus **310.** Any of the components of dripper **306** may comprise molded plastic. Internal element **303** may be inserted into external hollow element **301.**

In some embodiments one or more covers may be put on one or more sides of external hollow element **301,** thereby closing one or more of its ends.

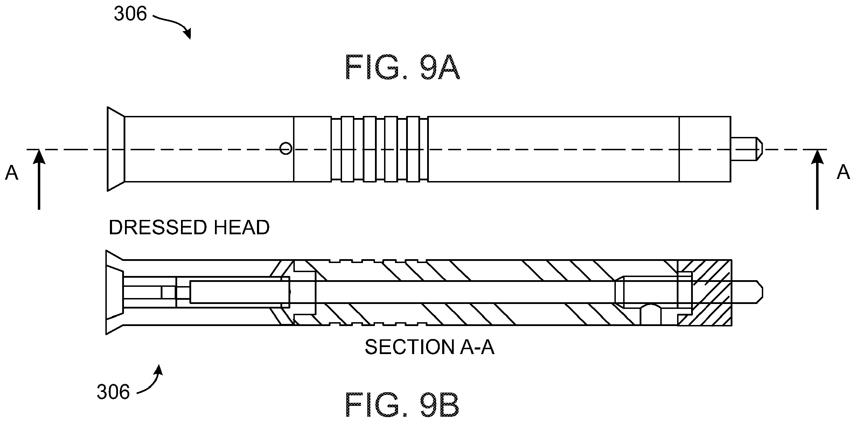

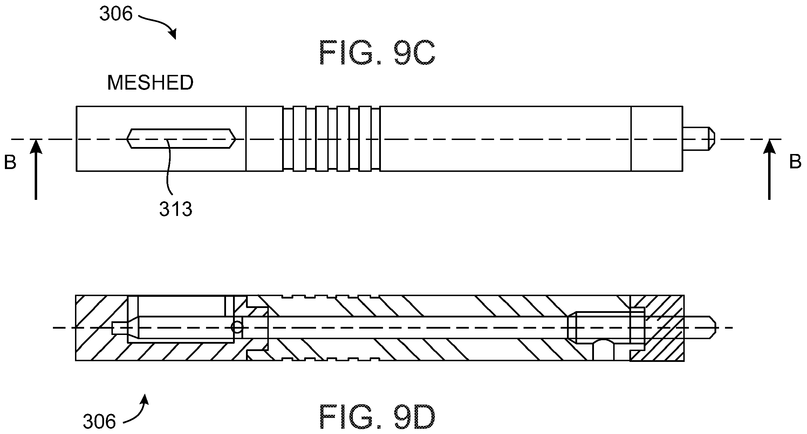

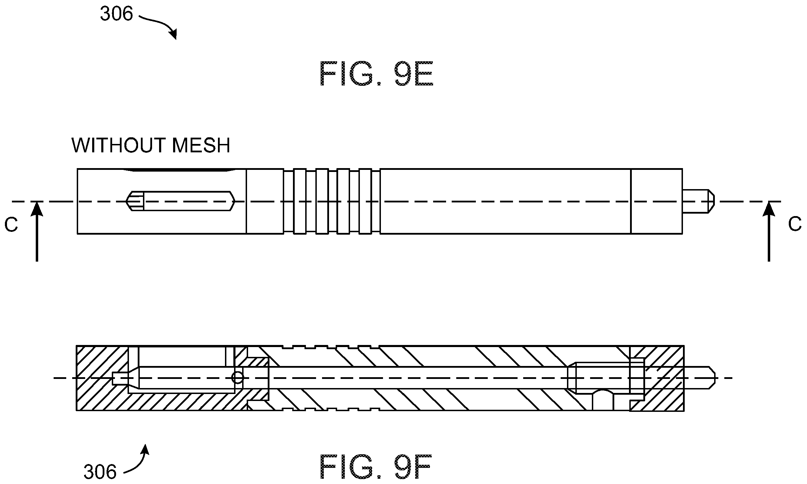

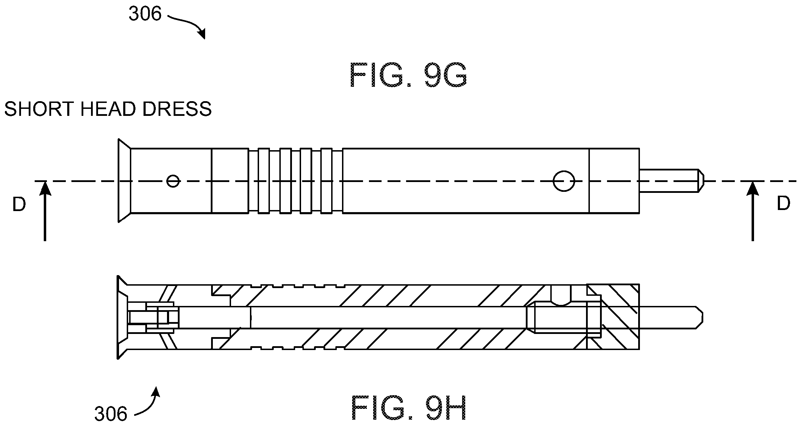

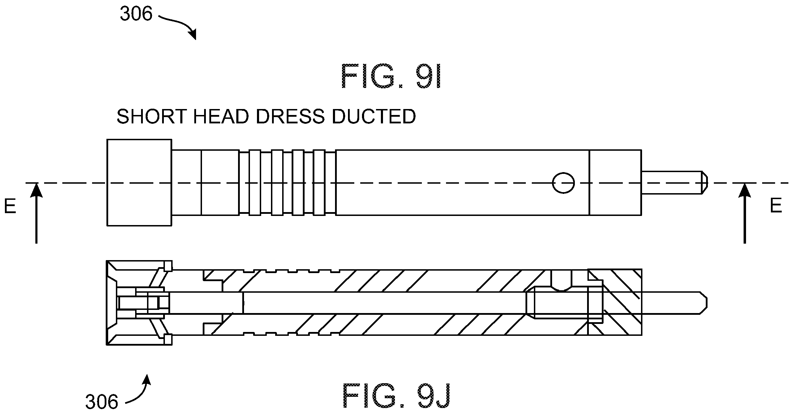

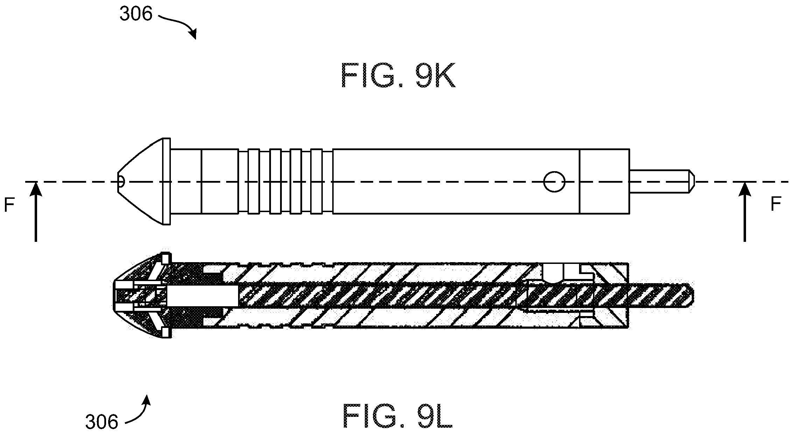

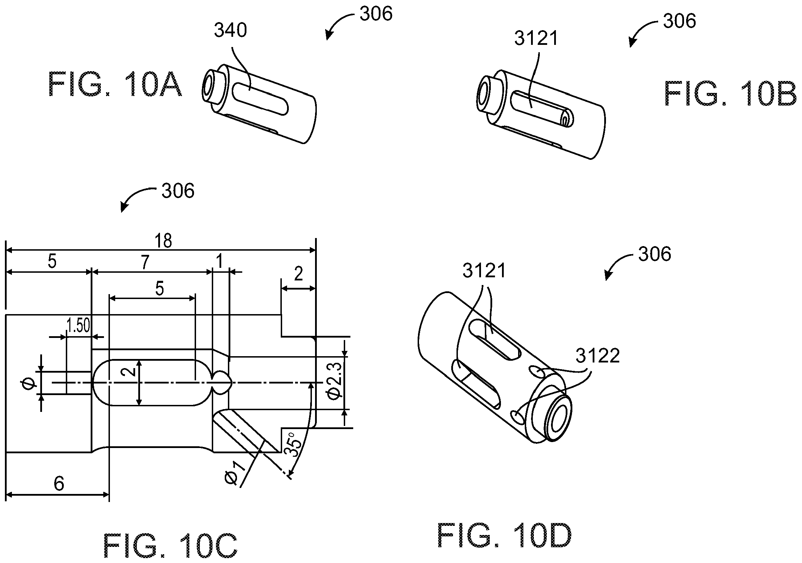

FIGs. 9A-L are schematic illustrations showing cross-sectional views of dripper **306,** according to several embodiments FIGs. 9A and 9B illustrate a side view (FIG. 9A) and a sectional view along the A---A line (FIG. 9B) of dripper **306** in embodiments in which dripper **306** comprises diagonal holes in the sides and exit holes under a dressed head (the left side is not shown in the drawing). FIGs. 9C and 9D illustrate a side view (FIG. 9C) and a sectional view along the B---B line (FIG. 9D) of dripper **306** in embodiments in which dripper **306** comprises elliptically shaped water inlet (see also FIG. 10A, below) with a filter **313.** FIGs. 9E and 9F illustrate a side view (FIG. 9E) and a sectional view along the C---C line (FIG. 9F) of dripper **306** in embodiments in which dripper **306** comprises an elliptically shaped water inlet without a filter (see also FIG. 10B, below). FIGs. 9G and 9H illustrate a side view (FIG. 9G) and a sectional view along the D---D line (FIG. 9H) of dripper **306** in embodiments which are similar to those shown in FIGs. 9A and 9B, except for a shorter distance between the dripper's end and the exit holes. FIGs. 9I and 9J illustrate a side view (FIG. 9I) and a sectional view along the E---E line (FIG. 9J) of dripper **306** in embodiments in which are similar to those shown in FIGs. 9C and 9D, except that dripper **306** comprises diagonal holes under a cover. FIGs. 9K and 9L illustrate a side view (FIG. 9K) and a sectional view along the F---F line (FIG. 9L) of dripper **306** in embodiments in which are similar to those shown in FIGs. 9C and 9D, except that the outer shape is tapered to reduce friction.

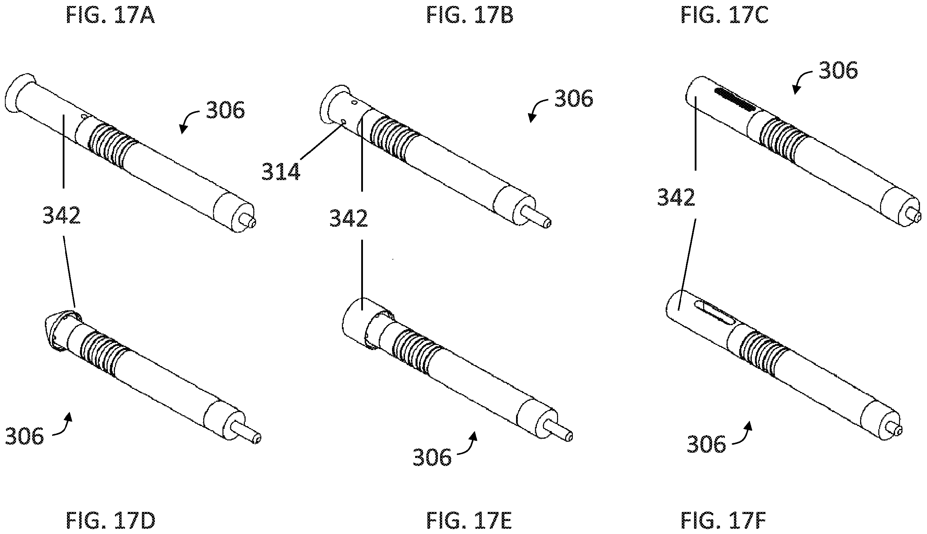

Perspective illustrations of the drippers illustrated in FIGs. 9A-L are shown in FIGs. 17A-F, where FIG. 17A corresponds to FIGs. 9A and 9B, FIG. 17C corresponds to FIGs. 9C and 9D, FIG. 17F corresponds to FIGs. 9E and 9F, FIG. 17B corresponds to FIGs. 9G and 9H, FIG. 17E corresponds to FIGs. 9I and 9J, and FIG. 17D corresponds to FIGs. 9K and 9L. The cover on external hollow element **301** is shown in FIGs. 17A-F at **342.**

The length of external hollow element **301** and internal element **303** may be between about 20 and 50 mm. The diameter of external hollow element **301** may be between about 1 and 10 mm, and the diameter of internal element **303** may be between about 0.5 and 9.7 mm. The size of inlet **312** and outlet **314** may be between about 0.5 and 5 mm. The height of "baths" **346** may be between about 100 and 500 micron larger than narrow space **310** and the width of narrow space **310** may be between about 50 and 400 micron.

It will be appreciated that although the drippers and their components that were described herein have a cylindrical shape, they may also be manufactured in other shapes such that the external hollow element and the internal element described herein may be in any shape or form, such as, ellipse, square, rectangular, triangular, hexagonal, octagonal, etc.

Alternatively or additionally, the dripper according to the present embodiments may have an elliptically shaped water inlet, or a plurality of such shaped inlets.

Alternatively or additionally, the dripper according to the present embodiments may have a water inlet having any geometric shape, such as square, rectangle, triangle and circle.

With reference to FIG. 10A, there is illustrated a perspective side view of an assembled dripper **306** having an elliptically shaped water inlet **3121** according to some embodiments of the present embodiments. As shown, the water inlet is positioned perpendicular to the drip.

Reference is now made to FIG. 10B, which displays a perspective side view of an assembled dripper **306** having an elliptically shaped water inlet **3121** and comprising a filter according to some embodiments of the present embodiments. The elliptical water inlet **3121** (or a plurality of such inlets) comprises a filter **340** in various possible shapes (grid, cross-sectional or longitudinal grooves). As shown, the water inlets **3121** are positioned perpendicular to the drip **306.**

In addition to the vertical elliptical inlet **3121** as displayed in FIGs. 10A and 10B, there are additional inlets, which are not vertical to the drip **306,** through which water enters when their flow direction is generally at an obtuse angle θ to the flow of water in the drip. Typical values of θ include, without limitation, from about 110° to about 155°, or from about 120° to about 145°, or from about 130° to about 145°, *e.g.,* about 135°. FIGs. 10C and 10D illustrate a cross sectional view (FIG. 10C) and a perspective side view (FIG. 10D) of an assembled dripper having an elliptically shaped water inlet **3121** and an additional water inlet **3122** oriented diagonally with respect to a normal to an outer surface of an external hollow element **301** according to some embodiments of the present embodiments.

The inlets reach a level where water enters the drip and creates turbulence that prevents particles from accumulating in the water entry area. The drip water entry area is the area where particles may accumulate and may cause a partial or complete blockage of the drip, such that if particles have been introduced into the drip **306,** then the particles may not accumulate and may exit through the outlet as a result of the dripper's three-dimensional shape and smoothness. The water inlets **3122** may be oriented in a diagonal position with respect to a normal to an outer surface of the external hollow element **301,** which may produce turbulent flow of water in entry to the dripper inlet.

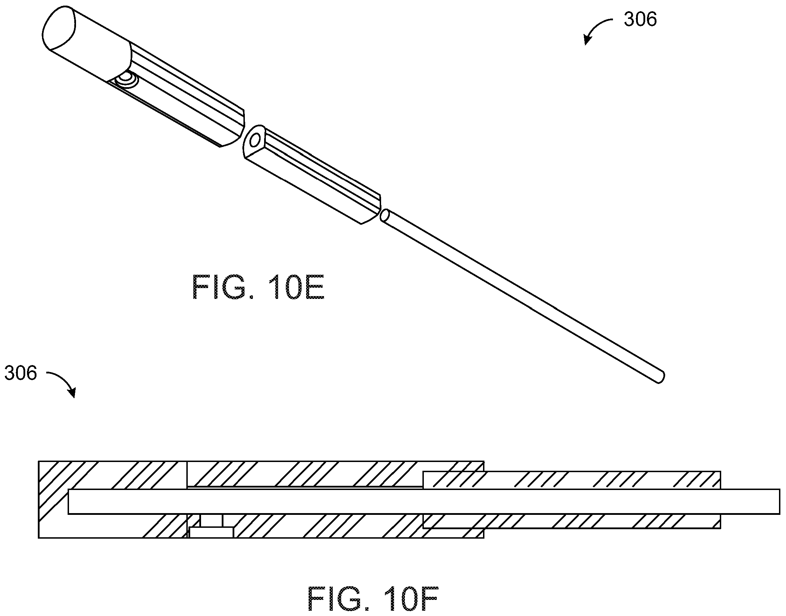

FIGs. 10E and 10F are schematic illustrations showing a perspective view (FIG. 10E) and a cross sectional view (FIG. 10F) of the assembled dripper in embodiments of the invention in which the internal element is held only from one side.

As described herein above, it was realized by the inventors of the present invention that drip irrigation systems work at pressures between 0.5 to 4 bar and cannot be applied in large commercial fields using a work pressure lower than 0.1 bar. The inventors devised an irrigation system having an irrigation pipe inclined at a slope that can be selected such that a water discharge along a length of the pipe varies by no more than 20%, or no more than 18%, or no more than 16%, or no more than 15%, or no more than 13%, or no more than 12%, or no more than 10%.

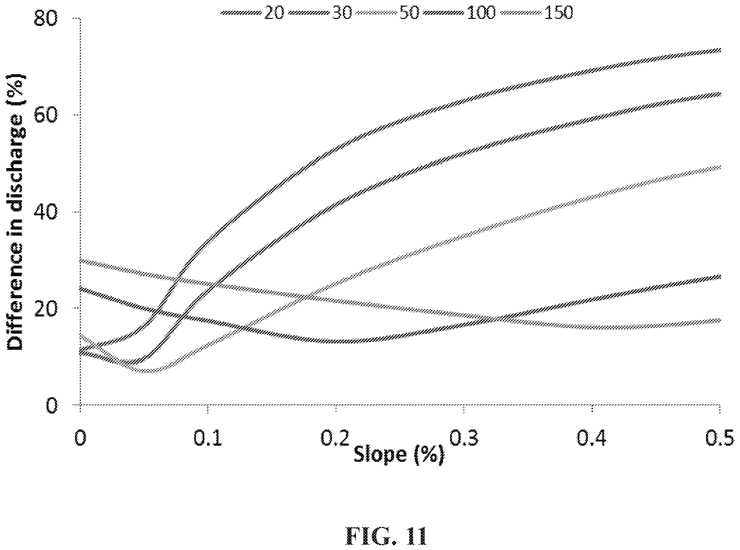

FIG. 11 is a graph plotting a difference in percentage between a dripper with high discharge to a dripper with low discharge as a function of a field slope for inlet heads about 20, 30, 50, 100 and 150 cm, with 4 drippers per meter, pipe length of about 150 m and diameter of about 25 mm, as obtained in experiments performed according to some embodiments of the present invention and listed in Table 1.

Table 1

| Dripper discharge variation coefficient along the pipe as a function of field slope and size of inlet head | | | | |
|---|---|---|---|---|
| Slope (%) | Inlet head (cm) | | | |
| | 20 | 30 | 40 | 50 |
| 0 | 6.15 | 6.01 | 6.77 | 14.79 |
| 0.05 | 3.95 | 2.75 | 3.53 | 13.20 |
| 0.1 | 10.22 | 7.16 | 4.72 | 11.81 |
| 0.2 | 19.84 | 15.49 | 9.87 | 9.75 |
| 0.5 | 34.56 | 29.27 | 21.51 | 9.55 |
| 0.75 | 39.93 | 35.04 | 27.65 | 12.32 |
| 1 | 43.47 | 39.12 | 32.24 | 15.51 |
| 1.5 | 48.41 | 44.84 | 38.85 | 21.62 |

Pressure at the last dripper was set to an estimated value and the dripper discharge was calculated. The head loss to the next dripper was calculated and the head change due to the slope to determine the pressure at the inlet of that dripper. The discharge of the two drippers was summed and so forth to the beginning of the pipe. Microsoft Excel "goal seek" function was used to change the pressure at the last dripper to set the target inlet head according to Table I above. The field slope was varied to evaluate slopes for efficiently operating the irrigation system of the present invention given maximum discharge difference of 10%.

The pipe slope can cause higher pressure at the end (depending on the slope), and thus, higher dripper discharge. The increased discharge towards the pipe end can cause lower discharge variability along the pipe and acceptable uniformity in yields.

*Flushing*

All pipes can be connected at the end by a "collector" tube which can be connected to a valve at its end (not shown here). The valve can be opened periodically to clean the system during irrigation (no less than once every 2 weeks) for duration of 5-20 minutes. Opening the valve can create faster flow rate inside the pipes which can clean the drippers from accumulated dirt. This procedure can work especially well in low pressure systems (up to 2m) where flow rates are typically slow. This valve can be controlled either manually or with a timer or using any irrigation control method. The flow rate in the pipe during the flushing depends on the pipe length (L), diameter (D) and smoothness (C), inlet head ($H_f$) and slope of the field and can be calculated using Hazen-Williams equation as provided below in EQ. III:

$$Q = \sqrt[1.852]{\frac{(H_f + L*slope)*C^{1.852}*D^{4.87}}{10.59*L}} \qquad \text{(EQ. III)}$$

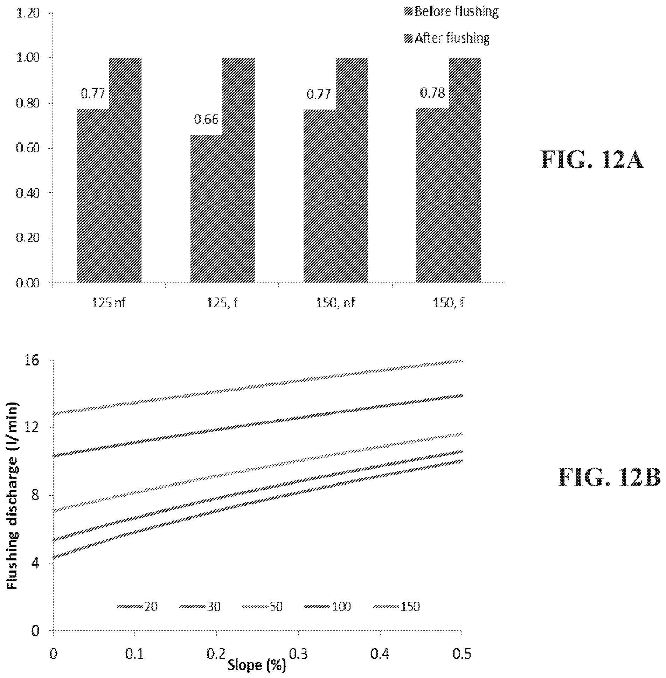

FIG. 12A is a graph showing a relative discharge of 4 different drippers before and after flushing, as obtained in experiments performed according to some embodiments of the present invention.

FIG. 12B is a graph showing water discharge in a pipe conduit during flushing as a function of a slope and an inlet pressure, for a pipe conduit having a length of about 150 m and a diameter of about 25 m, as obtained in experiments performed according to some embodiments of the present invention.

As can be seen in FIG. 12A, flushing of the pipe increased the discharge of clogged drippers to the original values.

Pipe flushing can create higher discharge and can waste water. However, pipe flushing for a short duration at the end/beginning of irrigation can keep the wasted amount of water minimal while keeping the drippers unclogged. The discharge of water through the pipe is shown in FIG. 12B, which exemplifies that pipe flushing with inlet head of about 50 cm and a slope of about 0.1% for duration of 10 minutes can waste 80 liters of water, which is a very small amount relative to surface irrigation.

The irrigation system according to the present invention can be designed to connect to existing agricultural water supply systems, which can be used for flood irrigation.

Field slope can be used as a design variable to directly influence the pipe pressure, and thus, the drippers' flow discharge along its length. The slope along the pipe can vary depending on the pipe length, the density of the drippers (number per tube length), and the water head at the inlet. As water flows in the pipe, there can be a pressure drop along the flow pathway due to friction, and therefore, there can be variations in drip flow.

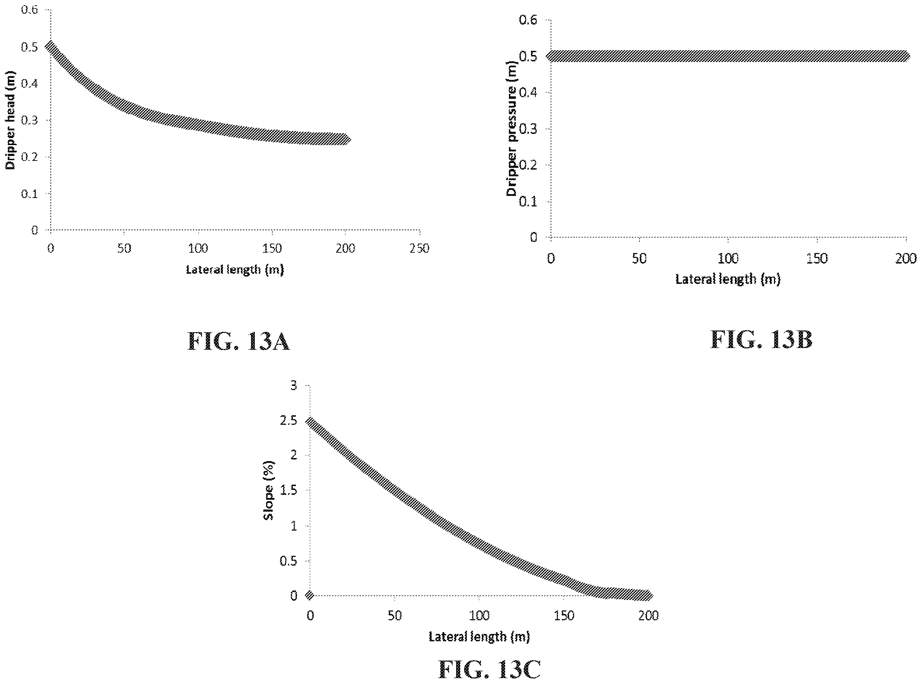

FIGs. 13A-13C are graphs of the inlet pressure as a function of the conduit length for a slope of 0° (FIG. 13A), varying slope (FIG. 13B), and slope selected to ensure a uniform flow rate (FIG. 13C), as obtained in experiments performed according to some embodiments of the present invention.

As shown in FIG. 13A, in a 200 m pipe without a slope not according to the invention (slope of 0°), the pressure decreased from 0.5 m at the beginning of the pipe to 0.16 m at its end. This pressure difference exhibits a difference of 67% in the flow rates. Head loss in the flow along the dripper can be calculated by the Darcy-Weisbach equation as described above.

Fields that are typically irrigated by flooding can have small slopes of between about 0.05% and about 1%. Therefore, in conventional dripping systems, where the working pressures are high of about 10-14 m, the slope has no significant effect, as the height differences are negligible relative to working pressures.

According to the system of the present invention, in which the working pressure can be close to zero, small height differences along the pipe length can have a substantial effect on the pipe pressure and the drippers flow rate. The slope **330,** S(l), can vary along the pipe to compensate for the pressure loss.

The slope at any point *l* along pipe **304** can be expressed mathematically as a slope function S(*l*). The slope function can be input to a controller of a shoveling tool, such as, but not limited to, a laser guided land-leveling system, to form a varying slope in a soil, and inclined irrigation pipe **304** with drippers **306** can be deploying, generally along the varying slope.

A representative slope function suitable for the present embodiments is:

$$S(l) = K * f_d * \frac{q^2}{g D_H{}^5} * (L - l)^3, \qquad \text{(EQ. IV)}$$

where K is a dimensionless constant. Typically, K is from about 0.1 to about 0.5 or from about 0.1 to about 0.3, where *L* is the length of the irrigation pipe **304,** $f_d$ is a friction factor, *q* is a flow rate in irrigation pipe **304** per unit length, *g* is the gravitational acceleration, $D_H$ is a hydraulic diameter of said irrigation pipe **304,** and *l* is a distance along irrigation pipe **304** from the highest level thereof.

Another representative slope function suitable for the present embodiments is:

$$S(l) = G \frac{q^\alpha}{C^\gamma D_H{}^\delta} (L - l)^\beta \quad \text{(EQ. V)}$$

where c is a smoothness coefficient of the pipe's material, and G, $\alpha$, $\beta$, $\gamma$ and $\delta$ and $\varepsilon$ are constant parameters. A typical value for *G* is from about 9 to about 11, a typical value for any of $\alpha$, $\beta$ and $\gamma$ is from about 1.2 to about 2.2, and a typical value for $\delta$ is from about 4 to about 5.5. In some embodiments of the present invention at least two, more preferably all, of $\alpha$, $\beta$ and $\gamma$ have the same value.

Since the pressure loss is greater at the beginning of the pipe and gradually decreases along the pipe, there can be a steeper slope at the beginning of the pipe and can be more moderate along the pipe length. In some embodiments of the present invention the slope S is selected also based on the distance between drippers **306.** The flow rate can also be affected by the distance between drippers, since each dripper can reduce the volume of water flowing through the pipe.

At the beginning of the pipe, the water flows at a maximum flow rate, and when water reaches the first dripper after a distance x, the flow rate gradually decreases in accordance with the flow rate in the dripper and so on. In the last portion of the pipe (up to the last dripper) the flow rate in the pipe equals the flow rate in the last dripper.

In FIGs. 13B and 13C, the slope can be determined so that the drip flow along the pipe is generally uniform. FIG. 13B shows that uniform flow can be achieved by the slope shown in FIG. 13C.

As used herein the term "about" or "approximately" refers to $\pm 10\%$.

The word "exemplary" is used herein to mean "serving as an example, instance or illustration." Any embodiment described as "exemplary" is not necessarily to be construed as preferred or advantageous over other embodiments and/or to exclude the incorporation of features from other embodiments.

The word "optionally" is used herein to mean "is provided in some embodiments and not provided in other embodiments." Any particular embodiment of the invention may include a plurality of "optional" features unless such features conflict.

The terms "comprises", "comprising", "includes", "including", "having" and their conjugates mean "including but not limited to".

The term "consisting of" means "including and limited to".

The term "consisting essentially of" means that the composition, method or structure may include additional ingredients, steps and/or parts, but only if the additional ingredients, steps and/or parts do not materially alter the basic and novel characteristics of the claimed composition, method or structure.

As used herein, the singular form "a", "an" and "the" include plural references unless the context clearly dictates otherwise. For example, the term "a compound" or "at least one compound" may include a plurality of compounds, including mixtures thereof.

The scope of the invention is limited by the appended claims.

**Claims**

1. A method of irrigation, the method comprising supplying water having particles (350) therein to an inclined irrigation pipe (304) provided with a plurality of drippers (306) receiving said water and said particles (350), wherein said supplying is selected to provide a pressure of from about 490 Pa (5 cm $H_2O$) to about 8825 Pa (90 cm $H_2O$) at a highest level of said inclined irrigation pipe (304);
   wherein at least one of said water irrigation drippers (306), comprises:

   an external hollow element (301) having at least one water inlet (312) configured to intake water and at least one water outlet (314) configured to discharge water from the dripper (306); and
   an internal element (303) placed inside said external hollow element (301) to form a water pathway (310) in a space therebetween;
   **characterized in that** said water pathway (310) is other than a one-dimensional pathway and comprises a plurality of alternative bypass flow routes (331, 332, 333) around any particle (350) between said internal element (303) and said external hollow element (301).

2. The method according to any of claim 1, wherein for at least one of said plurality of drippers (306) there is a linear relation between a discharge rate at an outlet (314) of said dripper (306) and an inlet pressure at an inlet (312) of said dripper (306).

3. The method according to claim 2, wherein said linear relation is **characterized by** a coefficient of said inlet pressure which is from about 2E-11 $m^4$s/Kg (7 cubic centimeters per hour per cm $H_2O$) to about 1.13E-10 $m^4$s/Kg (40 cubic centimeters per hour per cm $H_2O$).

4. The method according to claim 3, wherein said coefficient is from about 2E-11 $m^4$s/Kg (7 cubic centimeters per hour per cm $H_2O$) to about 5.67 $m^4$s/Kg (20 cubic centimeters per hour per cm $H_2O$).

5. The method according to any of claims 2-4, wherein said linear relation is **characterized by** an offset parameter from about 0 to about 0.05 l/h (50 cubic centimeters per hour).

6. The method according to claim 5, wherein said offset parameter first coefficient is from about 0.01 l/h (10 cubic centimeters per hour) to about 0.04 l/h (40 cubic centimeters per hour).

7. The method according to any of claims 1-6, wherein a number of drippers (306) per meter length of said inclined irrigation pipe of from about 1 to about 5.

8. The method according to any of claims 1-7, wherein a slope of said inclined irrigation pipe (304) is selected such that a water pressure along a length of said inclined irrigation pipe (304) varies by no more than 20%.

9. An irrigation system (300), comprising:

an inclined irrigation pipe (304) having a plurality of drippers (306) configured to discharge water, at least one of said water irrigation drippers (306), comprising an external hollow element (301) having at least one water inlet (312) configured to intake water and at least one water outlet (314) configured to discharge water from the dripper (306), and an internal element (303) placed inside said external hollow element (301) to form a water pathway (310) in a space therebetween;

a water supply system (302) configured to deliver water having particles (350) therein to said inclined irrigation pipe (304) at a highest level of said inclined irrigation pipe (304), for receiving of said water and said particles (350) by said drippers (306),

wherein a pressure of said water at said highest level of said inclined irrigation pipe (304) is from about 490 Pa (5 cm $H_2O$) to about 8825 Pa (90 cm $H_2O$);

**characterized in that** said water pathway (310) being other than a one-dimensional pathway and comprising a plurality of alternative bypass flow routes (331, 332, 333) around any particle (350) between said internal element (303) and said external hollow element (301).

10. The irrigation system according to claim 9, being devoid of a pump.

11. The irrigation system (300) according to any of claims 9 and 10, wherein a slope of said inclined irrigation pipe (304) is selected such that a water pressure along a length of said inclined irrigation pipe (304) varies by no more than 20%.

12. The irrigation system (300) according to any of claims 9 to 11, wherein said water pathway (310) at least partially surrounds said internal element (303).

13. The method according to any of claims 1 to 8, wherein said water pathway (310) at least partially surrounds said internal element (303).

## Patentansprüche

1. Verfahren zur Bewässerung, wobei das Verfahren die Zuführung von Wasser mit Partikeln (350) darin zu einem geneigten Bewässerungsrohr (304) umfasst, das mit einer Vielzahl von Tropfern (306) versehen ist, die das genannte Wasser und die genannten Partikel (350) aufnehmen, wobei die genannte Zuführung so gewählt ist, dass sie einen Druck von etwa 490 Pa (5 cm $H_2O$) bis etwa 8825 Pa (90 cm $H_2O$) auf einem höchsten Niveau des genannten geneigten Bewässerungsrohrs (304) bereitstellt;

wobei mindestens einer der genannten Bewässerungstropfer (306) Folgendes umfasst:

ein äußeres hohles Element (301) mit mindestens einem Wassereinlass (312), der so konfiguriert ist, dass er Wasser aufnimmt, und mindestens einem Wasserauslass (314), der so konfiguriert ist, dass er Wasser aus dem Tropfer (306) abgibt; und

ein inneres Element (303), das innerhalb des genannten äußeren hohlen Elements (301) angeordnet ist, um einen Wasserweg (310) in einem Raum dazwischen zu bilden;

**dadurch gekennzeichnet, dass** der genannte Wasserweg (310) ein anderer als ein eindimensionaler Weg ist und eine Vielzahl von alternativen Bypass-Strömungswegen (331, 332, 333) um jedes Teilchen (350) zwischen dem genannten inneren Element (303) und dem genannten äußeren hohlen Element (301) umfasst.

2. Verfahren nach einem der Ansprüche 1, wobei für mindestens einen der genannten Vielzahl von Tropfern (306) eine lineare Beziehung zwischen einer Abflussrate an einem Auslass (314) des genannten Tropfers (306) und einem Einlassdruck an einem Einlass (312) des genannten Tropfers (306) besteht.

3. Verfahren nach Anspruch 2, wobei die genannte lineare Beziehung durch einen Koeffizienten des genannten Einlassdrucks gekennzeichnet ist, der zwischen etwa 2E-11 $m^4s/Kg$ (7 Kubikzentimeter pro Stunde pro cm $H_2O$) und etwa 1,13E-10 $m^4s/Kg$ (40 Kubikzentimeter pro Stunde pro cm $H_2O$) liegt.

4. Verfahren nach Anspruch 3, wobei der genannte Koeffizient von etwa 2E-11 $m^4s/Kg$ (7 Kubikzentimeter pro Stunde pro cm $H_2O$) bis etwa 5,67 $m^4s/Kg$ (20 Kubikzentimeter pro Stunde pro cm $H_2O$) beträgt.

5. Verfahren nach einem der Ansprüche 2 bis 4, wobei die genannte lineare Beziehung durch einen Offset-Parameter von etwa 0 bis etwa 0,05 l/h (50 Kubikzentimeter pro Stunde) gekennzeichnet ist.

6. Verfahren nach Anspruch 5, wobei der erste Koeffizient des genannten Offset-Parameters von etwa 0,01 1/h (10 Kubikzentimeter pro Stunde) bis etwa 0,04 1/h (40 Kubikzentimeter pro Stunde) beträgt.

7. Verfahren nach einem der Ansprüche 1 bis 6, wobei eine Anzahl von Tropfern (306) pro Meter Länge des genannten geneigten Bewässerungsrohrs von etwa 1 bis etwa 5 beträgt.

8. Verfahren nach einem der Ansprüche 1 bis 7, wobei eine Neigung des genannten geneigten Bewässerungsrohrs (304) so gewählt wird, dass ein Wasserdruck entlang einer Länge des genannten geneigten Bewässerungsrohrs (304) um nicht mehr als 20% variiert.

9. Bewässerungssystem (300), das Folgendes umfasst:

ein geneigtes Bewässerungsrohr (304), das eine Vielzahl von Tropfern (306) aufweist, die dafür konfiguriert sind, Wasser abzugeben, wobei mindestens einer der genannten Bewässerungstropfer (306) ein äußeres hohles Element (301) mit mindestens einem Wassereinlass (312) umfasst, der so konfiguriert ist, dass er Wasser aufnimmt, und mindestens einem Wasserauslass (314), der so konfiguriert ist, dass er Wasser aus dem Tropfer (306) abgibt, und ein inneres Element (303), das innerhalb des genannten äußeren hohlen Elements (301) angeordnet ist, um einen Wasserweg (310) in einem Raum dazwischen zu bilden;
ein Wasserversorgungssystem (302), das dafür konfiguriert ist, Wasser mit Partikeln (350) darin zu dem genannten geneigten Bewässerungsrohr (304) auf einem höchsten Niveau des genannten geneigten Bewässerungsrohrs (304) zu liefern, zur Aufnahme des genannten Wassers und der genannten Partikel (350) durch die genannten Tropfer (306),
wobei ein Druck des genannten Wassers auf dem genannten höchsten Niveau des genannten geneigten Bewässerungsrohrs (304) von etwa 490 Pa (5 cm $H_2O$) bis etwa 8825 Pa (90 cm $H_2O$) beträgt;
**dadurch gekennzeichnet, dass** der genannte Wasserweg (310) kein eindimensionaler Weg ist und eine Vielzahl von alternativen Bypass-Strömungswegen (331, 332, 333) um jedes Teilchen (350) zwischen dem genannten inneren Element (303) und dem genannten äußeren hohlen Element (301) umfasst.

10. Bewässerungssystem nach Anspruch 9, das keine Pumpe aufweist.

11. Bewässerungssystem (300) nach einem der Ansprüche 9 und 10, wobei eine Neigung des genannten geneigten Bewässerungsrohrs (304) so gewählt wird, dass ein Wasserdruck entlang einer Länge des genannten geneigten Bewässerungsrohrs (304) um nicht mehr als 20% variiert.

12. Bewässerungssystem (300) nach einem der Ansprüche 9 bis 11, wobei der genannte Wasserweg (310) das genannte innere Element (303) zumindest teilweise umgibt.

13. Verfahren nach einem der Ansprüche 1 bis 8, wobei der genannte Wasserweg (310) das genannte innere Element (303) zumindest teilweise umgibt.

## Revendications

1. Procédé d'irrigation, le procédé consistant à alimenter avec de l'eau contenant des particules (350) un tuyau d'irrigation incliné (304) muni d'une pluralité de goutteurs (306) recevant ladite eau et lesdites particules (350), ladite alimentation étant sélectionnée pour fournir une pression d'environ 490 Pa (5 cm $H_2O$) à environ 8825 Pa (90 cm $H_2O$) à un niveau le plus élevé dudit tuyau d'irrigation incliné (304) ;
au moins un desdits goutteurs d'irrigation d'eau (306) comprenant :

un élément creux externe (301) ayant au moins une entrée d'eau (312) configurée pour admettre de l'eau et au moins une sortie d'eau (314) configurée pour évacuer l'eau du goutteur (306) ; et
un élément interne (303) placé à l'intérieur dudit élément creux externe (301) pour former un passage d'eau (310) dans un espace entre eux ;
le procédé étant **caractérisé en ce que** ledit passage d'eau (310) est autre qu'un passage unidimensionnel et comprend une pluralité de voies d'écoulement de dérivation alternatives (331, 332, 333) autour de toute particule (350) entre ledit élément interne (303) et ledit élément creux externe (301).

2. Procédé selon la revendication 1, dans lequel, pour au moins un goutteur de ladite pluralité de goutteurs (306), il existe une relation linéaire entre un débit d'évacuation au niveau d'une sortie (314) dudit goutteur (306) et une pression d'entrée au niveau d'une entrée (312) dudit goutteur (306).

3. Procédé selon la revendication 2, dans lequel ladite relation linéaire est **caractérisée par** un coefficient de ladite pression d'entrée qui est d'environ 2E-11 m$^4$s/Kg (7 centimètres cubes par heure par cm H$_2$O) à environ 1,13E-10 m$^4$s/Kg (40 centimètres cubes par heure par cm H$_2$O) .

4. Procédé selon la revendication 3, dans lequel ledit coefficient est d'environ 2E-11 m$^4$s/Kg (7 centimètres cubes par heure par cm H$_2$O) à environ 5,67 m$^4$s/Kg (20 centimètres cubes par heure par cm H$_2$O) .

5. Procédé selon l'une quelconque des revendications 2 à 4, dans lequel ladite relation linéaire est **caractérisée par** un paramètre de décalage d'environ 0 à environ 0,05 l/h (50 centimètres cubes par heure).

6. Procédé selon la revendication 5, dans lequel ledit premier coefficient de paramètre de décalage est 0,01 l/h (10 centimètres cubes par heure) à environ 0,04 l/h (40 centimètres cubes par heure).

7. Procédé selon l'une quelconque des revendications 1 à 6, dans lequel un nombre de goutteurs (306) par mètre linéaire dudit tuyau d'irrigation incliné est compris entre environ 1 et environ 5.

8. Procédé selon l'une quelconque des revendications 1 à 7, dans lequel une pente dudit tuyau d'irrigation incliné (304) est sélectionnée de telle sorte qu'une pression d'eau le long d'une longueur dudit tuyau d'irrigation incliné (304) ne varie pas de plus de 20 %.

9. Système d'irrigation (300), comprenant :

   un tuyau d'irrigation incliné (304) ayant une pluralité de goutteurs (306) configurés pour évacuer de l'eau, au moins un desdits goutteurs d'irrigation d'eau (306) comprenant un élément creux externe (301) ayant au moins une entrée d'eau (312) configurée pour admettre de l'eau et au moins une sortie d'eau (314) configurée pour évacuer l'eau du goutteur (306), et un élément interne (303) placé à l'intérieur dudit élément creux externe (301) pour former un passage d'eau (310) dans un espace entre eux ;
   un système d'alimentation en eau (302) configuré pour alimenter avec de l'eau contenant des particules (350) ledit tuyau d'irrigation incliné (304) à un niveau le plus élevé dudit tuyau d'irrigation incliné (304), pour la réception de ladite eau et desdites particules (350) par lesdits goutteurs (306),
   une pression de ladite eau audit niveau le plus élevé dudit tuyau d'irrigation incliné (304) étant d'environ 490 Pa (5 cm H$_2$O) à environ 8825 Pa (90 cm H$_2$O) ;
   le système d'irrigation étant **caractérisé en ce que** ledit passage d'eau (310) est autre qu'un passage unidimensionnel et comprend une pluralité de voies d'écoulement de dérivation alternatives (331, 332, 333) autour de toute particule (350) entre ledit élément interne (303) et ledit élément creux externe (301).

10. Système d'irrigation selon la revendication 9, le système d'irrigation étant dépourvu de pompe.

11. Système d'irrigation (300) selon l'une quelconque des revendications 9 et 10, dans lequel une pente dudit tuyau d'irrigation incliné (304) est sélectionnée de telle sorte qu'une pression d'eau le long d'une longueur dudit tuyau d'irrigation incliné (304) ne varie pas de plus de 20 %.

12. Système d'irrigation (300) selon l'une quelconque des revendications 9 à 11, dans lequel ledit passage d'eau (310) entoure au moins en partie ledit élément interne (303).

13. Procédé selon l'une quelconque des revendications 1 à 8, dans lequel ledit passage d'eau (310) entoure au moins en partie ledit élément interne (303).

FIG. 1

EP 3 355 685 B1

FIG. 2

FIG. 3A

EP 3 355 685 B1

EP 3 355 685 B1

302

300

304

310 336

306

312 314

306

306

FIG. 3B

FIG. 4

FIG. 5B

FIG. 5A

FIG. 5C

**FIG. 6**

EP 3 355 685 B1

Horizontal placement

Vertical placement

304

304

306

306

**FIG. 7A**

**FIG. 7B**

EP 3 355 685 B1

306

310

**FIG. 8A**

306

310

**FIG. 8B**

306

FIG. 9A

306

DRESSED HEAD

SECTION A-A

FIG. 9B

A
A

306

FIG. 9C

MESHED

313

B

B

EP 3 355 685 B1

306

FIG. 9D

306

FIG. 9E

WITHOUT MESH

C ← → C

FIG. 9F

306

EP 3 355 685 B1

FIG. 9G

306

SHORT HEAD DRESS

D

D

FIG. 9H

306

306

## FIG. 9I

SHORT HEAD DRESS DUCTED

E

E

306

## FIG. 9J

EP 3 355 685 B1

306

FIG. 9K

F                                                    F

306

FIG. 9L

306

3121

**FIG. 10B**

306

3122

3121

**FIG. 10D**

306

340

**FIG. 10A**

306

18

7

5

2

1.50

$\phi$

2

$\phi 2.3$

$35°$

$\phi 1$

6

**FIG. 10C**

FIG. 10E

306

FIG. 10F

306

FIG. 11

FIG. 12A

FIG. 12B

**FIG. 13A**

**FIG. 13B**

**FIG. 13C**

**FIG. 14**

EP 3 355 685 B1

FIG. 15A

FIG. 15B

FIG. 16A

FIG. 16B

FIG. 17C

FIG. 17B

FIG. 17A

306

306

306

342

314

342

FIG. 17F

FIG. 17E

FIG. 17D

306

306

306

342

**EP 3 355 685 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7048010 B

- EP 1269012 A1